# EUROPÄISCHE PATENTANMELDUNG

(11) **EP 1 321 565 A1**
(43) Veröffentlichungstag der Anmeldung: **25.06.2003**
(21) Anmeldenummer: 02027134.2
(22) Anmeldetag: 04.12.2002
(51) Int. Cl.: D06F 58/28, D06F 39/00, G01N 22/04, G01F 23/284

(54) **Wäschepflegeeinrichtung mit Feuchtsensor und Verfahren zur Messung der Feuchte in einer Wäschepflegeeinrichtung**

(30) Priorität: 21.12.2001 DE 10163195
(71) Anmelder: BSH Bosch und Siemens Hausgeräte GmbH, 81669 München (DE)
(72) Erfinder: Fochem, Manfred, 10629 Berlin (DE); Heide, Patric, Dr., 85579 Neubiberg (DE); Lahrmann, Andreas, Dr., 14193 Berlin (DE); Nitschmann, Kai, 13187 Berlin (DE); Vossiek, Martin, Dr., 31139 Hildesheim (DE); Wagner, Martin, 81377 München (DE)

(57) **Zusammenfassung**

Es wird eine Wäschepflegeeinrichtung mit einem Sensor zur Erkennung des Feuchtegehaltes der Wäsche vorgeschlagen, welcher nach dem Transmissions- und/oder Reflexionsprinzip von Mikrowellen basiert. Dazu wird ein Mikrowellensignal in das Innere der Wäschetrommel eingekoppelt und ggf. nach Reflexion gemessen und vorzugsweise mit dem gesendeten Signal verglichen. Anhand des Phasen-, Amplituden- und Laufzeitunterschiede zwischen gesendetem und empfangenem Signal werden der Feuchtegehalt der Wäsche und ggf. zusätzlich der Befüllungsgrad der Wäsche in der Wäschetrommel ermittelt.

## Beschreibung

Die Erfindung betrifft eine Wäschepflegeeinrichtung nach dem Oberbegriff von Anspruch 1. Unter Wäschepflegeeinrichtungen werden dabei insbesondere Wäschetrockner, Waschmaschinen, kombinierte Geräte oder auch andere Pflegeeinrichtungen verstanden.

Unter Wäsche ist im Sinne der Erfindung jede Art von Textilien oder Geweben zu verstehen. Gängige Wäschetrockenverfahren arbeiten nach dem Kondensatorprinzip, bei der die in der Wäsche enthaltene Feuchtigkeit durch Wärmezufuhr in die Gasphase überführt und an einem Kondensator als Flüssigkeit wieder auskondensiert wird, bis der Wäsche die Feuchtigkeit in einem gewünschten Maße bzw. bis zu einer gewünschten Trockenstufe entzogen ist. Diesen und auch anderen bekannten Verfahren ist der relativ hohe Energieverbrauch gemein, der zur Überführung der Gesamtfeuchtigkeit in die Gasphase erforderlich ist und der nur teilweise durch Wärmetauschen zurückgewonnen werden kann. Darüber hinaus stellen bekannte Wäschetrockenverfahren eine mechanische und thermische Belastung der Wäsche dar. Moderne Wäschetrockner besitzen daher Einrichtungen, die diese Belastungen der Wäsche sowie den Energieverbrauch minimieren.

Eine Möglichkeit, den Verfahrensfortschritt beim Wäschetrocknen zu kontrollieren, besteht darin, den Feuchtegehalt der Wäsche zu messen und das Meßergebnis entweder zur Anzeige zu bringen oder mit dem Meßergebnis das weitere Verfahren zu steuern und ggf. das Trockenverfahren automatisch zu beenden.

Für die Messung des Feuchtigkeitsgehalts in einem Material sind verschiedene akustische, optische und elektrische Verfahren geeignet. Die Anwendung akustischer Verfahren zur Feuchtemessung von Wäsche haben den Nachteil, daß die akustische Einkopplung der Wellen in die Wäsche sehr schwierig ist. Außerdem weist Wäsche eine hohe Dämpfung akustischer Wellen auf, was eine Messung stark behindert. Optische Verfahren wie Infrarot-Reflexions- und Absorptionsverfahren hingegen können leicht durch Verschmutzung gestört werden. Außerdem sind die Sensoren selbst gegen Feuchte und Wasserdampf empfindlich und zeigen zumeist ein stark temperaturabhängiges Verhalten.

Elektrische Verfahren zur Feuchtebestimmung lassen sich in zwei Untergruppen aufteilen. Zum einen sind dies Verfahren, die den komplexwertigen oder reellen elektrischen Leitwert in Form von Leitfähigkeitsmessungen bestimmen und zumeist unterhalb einer Arbeitsfrequenz von 10 MHz arbeiten. Zum anderen sind dies Meßverfahren, mit denen der komplexe Leitwert bestimmt wird und die eine Arbeitsfrequenz von zumeist oberhalb 100 MHz aufweisen. Die unterschiedlichen Meßfrequenzen ergeben sich dadurch, daß oberhalb einiger 10 MHz der Einfluß der Leitfähigkeit abnimmt und im Gegenzug der Einfluß der dielektrischen Effekte dominierend wird.

Leitfähigkeitsmessungen haben den Nachteil, daß der Leitwert von Wasser durch in Wasser gelöste Substanzen bestimmt wird und daher starken örtlichen und zeitlichen Schwankungen unterworfen ist. Vorteilhaft ist dagegen die Bestimmung der Dielektrizitätskonstante, deren Höhe vornehmlich durch die Menge der Wassermoleküle in der Wäsche bestimmt ist und daher direkt der interessierenden Größe zugeordnet werden kann.

Zur Messung des Feuchtegehalts von Schüttgütern wie Getreide und Beton, von Mauerwerk, Papier und dünnen Materialien sind Mikrowellensensoren bekannt bzw. werden Verfahren angewendet, die mit Mikrowellen arbeiten. Mikrowellensensoren sind beispielsweise aus US 4,991,915, US 4,674,325, US 4,620,146, US 4,484,133 oder EP-A 0 468 023 bekannt. Bei den bekannten Verfahren und Anordnungen handelt es sich um spezielle Ausführungen und Verfahren, die für den Einsatz in Wäschetrocknern nicht vorgesehen und oder nicht geeignet sind. In Verbindung mit Wäschepflegeeinrichtungen werden Mikrowellen bislang nur zum Zweck der Wäschetrockung verwendet, beispielsweise in einem aus der US-A 4 765 066 bekannten Verfahren.

Aufgabe der vorliegenden Erfindung ist es, eine Wäschepflegeeinrichtung mit einem Feuchtesensor und ein Verfahren anzugeben, mit denen eine sichere und genaue Bestimmung der Wäschefeuchte möglich ist.

Die Aufgabe wird erfindungsgemäß durch eine Wäschepflegeeinrichtung mit den Merkmalen von Anspruch 1 gelöst. Vorteilhafte Ausgestaltungen der Erfindung sowie ein Verfahren zur Bestimmung des Feuchtigkeitsgehalt in Wäsche sind weiteren Ansprüchen zu entnehmen.

Die erfindungsgemäße Wäschepflegeeinrichtung nutzt die Dämpfung, die ein Mikrowellensignal beim Durchgang durch ein Medium mit hoher Dielektrizitätszahl erfährt, zur Bestimmung der Feuchtigkeit von in einer Wäschetrommel angeordneter Wäsche. Der Betrag der Dielektrizitätszahl von Wäsche oder Kleidung liegt etwa in der Größenordnung von 2 bis 5. Da Wasser eine deutlich größere Dielektrizitätszahl von ca. 80 aufweist, wird die Dielektrizitätszahl von feuchter Wäsche maßgeblich durch den Wasseranteil in der Wäsche bestimmt. Die mittlere Dielektrizitätszahl innerhalb der Wäsche kann über Reflexion, Transmission, Dämpfung, Phasenverschiebung und Laufzeiten von Mikrowellensignalen bestimmt werden. Über die Dielektrizitätszahl kann direkt auf den Feuchtegehalt der Wäsche zurückgerechnet werden.

Eine erfindungsgemäße Wäschepflegeeinrichtung umfaßt daher einen geschlossenen Innenraum mit einer Wäschetrommel, eine Einrichtung zum Entzug von Feuchtigkeit aus der Wäsche und einen Sensor zur Erkennung des Feuchtegehalt der Wäsche, welcher umfaßt:

Im Innenraum angeordnete Sende- und Empfangseinrichtungen für Mikrowellen, eine Meßschaltung und eine Auswerteeinrichtung zum Ansteuern von Sende- und Empfangseinrichtung, zum Vergleich von gesendetem und empfangenem Mikrowellensignal, zur Ermittlung einer Transmission und/oder Reflexion daraus und zur Zuordnung der Transmission und/oder Reflexion zu einem zu bestimmenden Feuchtegehalt in der Wäschetrommel.

Der Feuchtegehalt beeinflußt direkt die Amplitude und die Phase (Laufzeit) eines durch die Wäschetrommel und damit durch die Wäsche gestrahlten Mikrowellensignals. Mit zunehmender Feuchte und damit zunehmender Dielektrizitätszahl der Wäsche reduziert sich Amplitude eines durch die Wäsche transmittierten Mikrowellensignals und es wird dabei eine größere Phasenverschiebung des transmittierten Mikrowellensignals gegenüber dem eingestrahlten Mikrowellensignal erhalten.

Zur Auswertung wird vorzugsweise das von der Empfangseinrichtung empfangene Mikrowellensignal mit dem abgestrahlten Mikrowellensignal verglichen. Aus der Differenz wird ein Meßwert ermittelt, der in der Auswerteeinrichtung einen Feuchtegehalt der Wäsche zugeordnet wird. Diese Zuordnung kann über einen Algorithmus erfolgen, in den dann verschiede Randparameter, beispielsweise bzgl. Material und Geometrie der Wäschetrommel mit einbezogen werden müssen. Vorzugsweise wird die Zuordnung jedoch anhand von Vergleichswerten vorgenommen, die in der Auswerteeinheit abgespeichert sind.

In einer Ausgestaltung der Erfindung wird die Transmission eines Mikrowellensignals durch die mit Wäsche befüllte Wäschetrommel gemessen. Dazu ist zumindest ein Antennen-Paar, bestehend aus je einer Sende- und Empfangseinrichtung, vorzusehen. Mit einem solchen Paar kann ein genauer Ausbreitungsweg des Mikrowellensignals festgelegt werden, bzw. nur ein solches Signal der Auswertung zugeführt werden, welches einen vorgegebenen Ausbreitungsweg durch die Wäsche genommen hat. Die Antennen können dabei direkt innerhalb der Wäschetrommel oder auch außerhalb, ggf. hinter einem für Mikrowellensignale durchlässigen, aber für Flüssigkeiten dichten Fenster angeordnet sein, was insbesondere in der metallischen Rückwand der Wäschetrommel angebracht ist.

In einer weiteren Ausgestaltung der Erfindung werden mehrere Paare von Sende- und Empfangseinrichtungen vorgesehen, die jeweils auf verschiedenen Höhen innerhalb der Wäschetrommel angeordnet sind. Jedes Paar mißt dann die Transmission entlang eines eigenen Strahlenganges. Mit den verschiedenen Paaren läßt sich somit ein Verlauf des Feuchtegehaltes über die Höhe innerhalb der Wäschetrommel bestimmen, aus dem der Befüllungsgrad der Wäsche in der Wäschetrommel ermittelt werden kann.

Möglich ist es auch, nur eine Antenne innerhalb der Wäschetrommel vorzusehen, die sowohl zum Senden als auch zum Empfangen von Mikrowellen geeignet ist. Eine Transmission wird dann erhalten, wenn das über die Antenne ausgesendete Mikrowellensignal innerhalb der Wäschetrommel zur Antenne zurückreflektiert wird. Vorzugsweise wird die Antenne so ausgerichtet, daß die Reflexion definiert von einer geometrisch günstig angeordneten metallischen Innenfläche der Wäschetrommel erfolgen kann. Mit dieser Methode ist es auch möglich, unterschiedliche Reflexionen bzw. Echos auszuwerten und beispielsweise über die Laufzeit der Signale auch auf die Entfernung einer eine Reflexion verursachenden Phasengrenze zu schließen. Eine solche Phasengrenze kann neben den Innenwänden der Wäschetrommel auch die obere Befüllungsgrenze der Wäsche darstellen. Damit ist es möglich, die Reflexion an der Befüllungsobergrenze in der Wäschetrommel zu messen und aus der entsprechenden Laufzeit des Echos auf den Befüllungsgrad innerhalb der Wäschetrommel zu schließen. Für dieses Meßverfahren ist es vorteilhaft, die Antenne im oberen Bereich der Wäschetrommel anzuordnen, da die Reflexion an der Grenze zum dielektrisch dichteren Medium, also an der Grenze von Luft zu feuchter Wäsche verstärkt erfolgt. Aus den Echosignalen der Phasengrenze bzw. der rückwärtigen oder unteren Wand der Wäschetrommel läßt sich darüber hinaus innerhalb einer Messung zusätzlich noch der Feuchtegehalt bestimmen. Während das von der Befüllungsgrenze der Wäsche erzeugte Echo nahezu unverändert bleibt, wird das zweite Echosignal, welches die Wäsche zweimal transmittiert hat, vom Feuchtegehalt der Wäsche gedämpft und zusätzlich noch phasenverschoben. Aus dem Größenverhältnis der beiden Echosignale läßt sich dann direkt der Feuchtegehalt der Wäsche ermitteln.

Eine weitere Möglichkeit der Auswertung besteht darin, einzelne Parameter mit davon unabhängigen zusätzlichen Sensoren zu bestimmen oder von vornherein Informationen in die Auswertung einzubringen. Dazu kann beispielsweise die Temperatur mit einem externen Temperatursensor, der Befüllungsgrad mit einem Abstandssensor, die Masse durch Auswiegen der Befüllung oder durch Auswerten des für die Bewegung der Trommel erforderlichen Motorstroms erfaßt werden. Die Kenntnis der Wäscheart kann als Vorgabe durch den Benutzer in die Auswertung mit eingehen. Ebenso bereits vorhandene Erkenntnisse über die Kopplung bestimmter Größen, beispielsweise die Kopplung der Größen Wäschedichte, Füllmenge, Wäscheart und Wäschefeuchte basierend auf Masse und Elastizitätsparametern.

Im folgenden wird die Erfindung anhand von Ausführungsbeispielen und der dazugehörigen sechs Figuren näher erläutert.
- Figuren 1 bis 5: zeigen verschiedene Anordnungen von Sende- und Empfangsantenne innerhalb einer Wäschetrommel
- Figur 6: zeigt ein zur Bestimmung des Befüllungsgrades in der Wäschetrommel geeignetes Meßsignal.

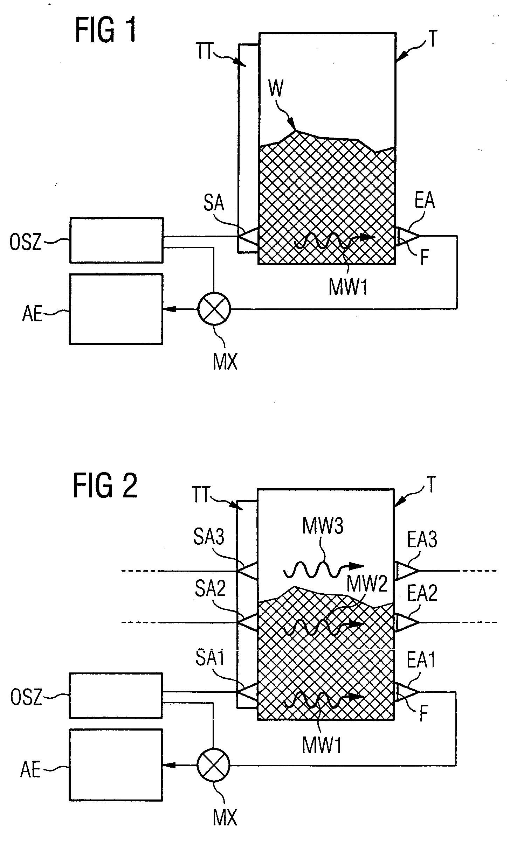

Figur 1 zeigt eine Anordnung, bei der eine Transmissionsmessung vorgenommen wird. Das Sendesignal wird von einem Oszillator OSZ erzeugt und über eine Sendeantenne SA in die Wäschetrommel abgestrahlt. Die Antenne ist z.B. in der für Mikrowellen durchlässigen Tür TT der Wäschetrommel T oder im Inneren der Wäschetrommel, vorzugsweise aber in deren unteren Teil angeordnet. Der Antenne SA gegenüberliegend ist eine Empfangsantenne EA, vorzugsweise hinter einem für Mikrowellen durchlässigen Fenster F angeordnet, die das von der Sendeantenne SA erzeugte Mikrowellensignal MW1 empfangen kann. Das Mikrowellensignal MW1 muß daher auf seinem Transmissionsweg durch die in der Wäschetrommel T angeordnete Wäsche W dringen. Das an der Empfangsantenne EA empfangene Signal wird vorzugsweise auf einen Mischer MX gegeben, dessen anderer Eingang mit dem Oszillator OSZ verbunden ist. Das erhaltene frequenz-gemischte Signal ist dann niederfrequent und daher gut auswertbar. Vorzugsweise wird der Mischer MX als Quadraturmischer ausgeführt, so daß der Auswerteeinheit AE ein komplexwertiges Meßsignal zur Verfügung steht. In diesem Fall ist eine einfache Bestimmung der Amplitude und Phase des empfangenen Signals möglich.

In der Auswerteeinheit wird der gemessenen Amplitude und Phase des Signals ein Feuchtigkeitsgehalt der Wäsche zugeordnet. Je größer die Phasenverschiebung zwischen gesendetem und empfangenen Mikrowellensignal ist und je schwächer die Transmission bzw. das empfangene Signal ist, desto größer ist der Feuchtegehalt der Wäsche.

Mit der gleichen Meßanordnung kann in einer verbesserten Auswertung der Meßvorgang bei unterschiedlichen Frequenzen durchgeführt werden. Auf diese Weise können konstante Einflußgrößen wie Beladungsdichte, Wäscheart usw., welche die Meßwerte ebenfalls beeinflussen können, vom gewünschten Parameter bzw. vom gewünschten Einfluß des zu beobachtenden Parameters "Feuchtegehalt" besser getrennt werden. Bei unterschiedlichen Meßfrequenzen wirken die genannten Einflußfaktoren unterschiedlich auf die Meßgrößen ein und es ergeben sich neue, nicht redundante Meßinformationen. Mit den neuen Meßinformationen wird der Bestimmungsgrad des durch die Messung beschriebenen Gleichungssystems erhöht. Dadurch wird die Auswertung erleichtert.

Die Meßfrequenz ist bei dem beschriebenen Meßverfahren so gewählt, daß der Einfluß der elektrischen Leitung gering ist. Dies sind vorzugsweise Frequenzen von oberhalb 100 MHz. Bei höheren Frequenzen nimmt allerdings die Dämpfung durch feuchte Wäsche zu, so daß bei zu hohen Frequenzen und insbesondere bei hohem Feuchtegehalt der Wäsche keine Transmission mehr meßbar ist. Eine höhere Meßfrequenz ist dennoch für eine weitgehend trockene Wäsche geeignet und kann daher vorzugsweise zum Erkennen der vollständigen Trocknung genutzt werden. Dieser Wert kann dann mit einer automatischen Endabschaltung der Trockeneinrichtung verknüpft werden.

Figur 2 zeigt eine weitere Meßanordnung, bei der weitere Paare von Sende- und Empfangsantennen SA, EA innerhalb der Wäschetrommel T auf unterschiedlichen Höhen vorgesehen sind. Mit jedem Paar von Sende- und Empfangsantenne wird entlang eines eigenen, zu den anderen jeweils unterschiedlichen Transmissionswegen gemessen, welche ggf. unterschiedliche Meßwerte bzgl. des Feuchtegehaltes ergeben kann. Ist ein Paar von Sende- und Empfangsantennen SA3, EA3 oberhalb einer gegebenen Wäschetrommelbefüllung angeordnet, so wird für diesen Transmissionsweg, der keine feuchte Wäsche durchquert, eine minimale Feuchte bzw. gar keine Feuchte detektiert. Über die erhaltenen Werte für die unterschiedlichen Antennenpaare bzw. die in unterschiedlicher Höhe gelegenen Transmissionswege läßt sich so ein Befüllungsgrad in der Wäschetrommel ermitteln, für dessen Genauigkeit die Anzahl der Antennenpaare maßgeblich ist.

Eine weitere Möglichkeit, mit verschiedenen Antennenpaaren eine Aussage über den Wäschefüllstand in der Wäschetrommel zu erhalten, nutzt die Tatsache, daß sich in feuchter Wäsche aufgrund der Masse ein über die Höhe variables Dichteprofil ergibt. Geht man davon aus, daß dieses Profil bekannt und konstant ist, läßt sich bereits mit zwei Paaren von Sendeund Empfangsantennen bzw. auf zwei in unterschiedlicher Höhe erfolgenden Meßwegen eine Aussage über die dort unterschiedlichen Dichten ermitteln und über das bekannte Profil aus diesem Dichtegradient eine Aussage über die Füllstandshöhe der Wäsche in der Wäschetrommel erlangen.

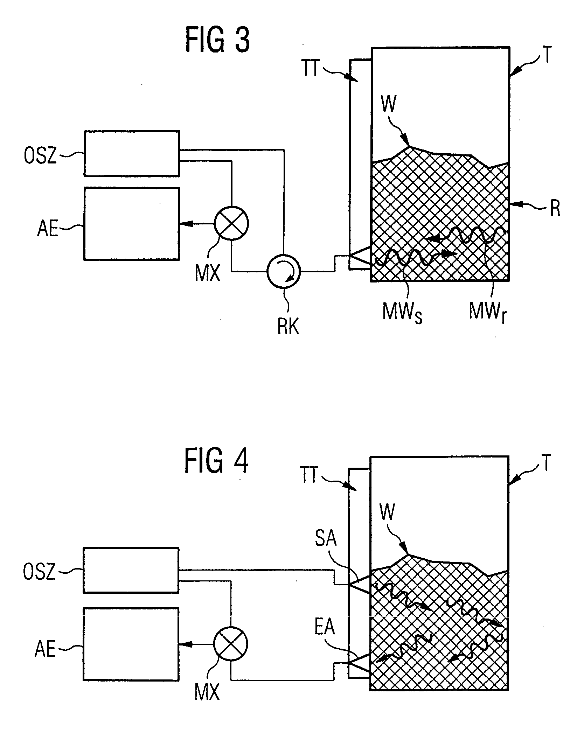

Figur 3 zeigt eine vereinfachte Meßanordnung, bei der die metallische Rückwand R als Reflektor für das Mikrowellensignal und somit zur Signalübertragung ausgenutzt wird. Zum Aussenden und Empfangen des Mikrowellensignals ist jeweils eine separate Antenne SA, EA vorgesehen. Die Signalverarbeitung kann wie in den in Figur 1 und 2 dargestellten Ausführungen erfolgen.

Figur 4 zeigt eine weiter vereinfachte Möglichkeit, bei der eine einzige, mit einem Richtkoppler verbundene Antenne zum Senden und Empfangen des Mikrowellensignals vorgesehen ist. Auch hier wird die Rückwand R als Reflektor für das Mikrowellensignal ausgenutzt.

Zur Unterdrückung von Meßfehlern durch Mehrfachreflexionen, die insbesondere bei trockener Wäsche zwischen den Trommelwänden zu erwarten sind, ist es möglich, eine Entfernungsauflösende Messung der Mikrowellensignale MW vorzunehmen. Hierzu werden vorzugsweise kurze Mikrowellenpulse verwendet, mit deren Hilfe die empfangenen Signale MWᵣ über die Laufzeit ausgewertet werden können. Unterschiedliche empfangene und reflektierte Mikrowellensignale mit unterschiedlichen Laufzeiten können so unterschiedlichen Raumbereichen bzw. unterschiedlichen Transmissionswegen innerhalb der Wäschetrommel T zugewiesen werden. Da Mehrfachreflexionen eine größere Laufzeit als der direkte Ausbreitungsweg haben, können sie auf diese Weise auch ausgefiltert bzw. getrennt ausgewertet werden.

Eine weitere Möglichkeit besteht darin, das in die Wäschetrommel T eingekoppelte Signal MW_{S} zu modulieren. Entsprechend bekannten Verfahren in der Radarmeßtechnik läßt sich hierdurch der sensitive Bereich des Mikrowellensensors auf einen bestimmten interessierenden Raumbereich begrenzen.

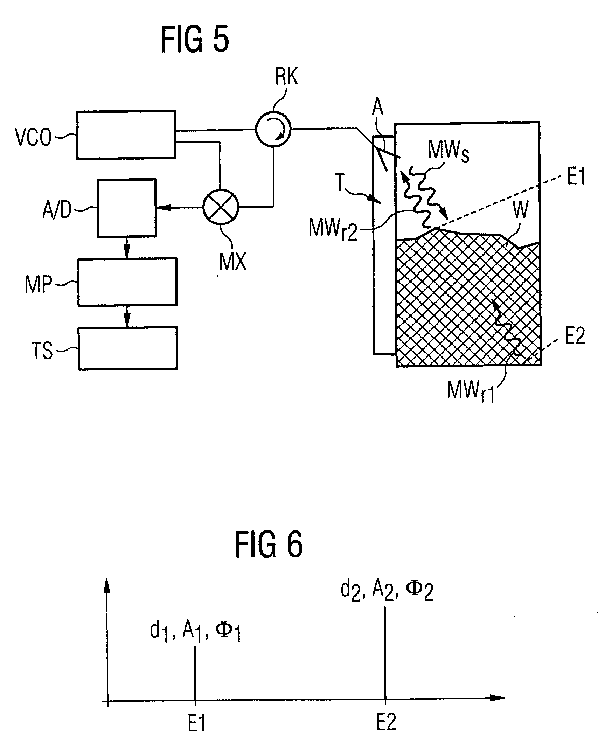

Figur 5 zeigt eine weitere vorteilhafte Ausführungsform der Erfindung. Hierzu wird eine Messung nach dem Radarmeßprinzip ausgeführt. Der Mikrowellensensor wird hierzu als FMCW-Radar (frequency modulated continuous wave radar) ausgeführt. Möglich ist es auch, als gleichwertige Alternative nach dem Pulsmeßprinzip zu verfahren. Die Grundprinzipien dieser beiden Verfahren sind beispielsweise in J. Detlefsen: "Radartechnik", Springer-Verlag, Berlin, 1989 dargestellt. Mit beiden Verfahren wird ein sog. Echoprofil erhalten, in dem die Amplituden und ggf. auch die Phase des reflektierten Signals in Abhängigkeit von der Entfernung dargestellt sind. Dazu wird vorzugsweise ein spannungsgesteuerter Oszillator VCO, ein Richtkoppler RK verwendet, der eine gemeinsame Antenne A nutzt, die im oberen Bereich innerhalb der Wäschetrommel T angeordnet ist. Die Auswerte- und Meßschaltung kann hier noch einen Analog/Digitalwandler A/D, einen Mikroprozessor MP und eine Trocknersteuerung TS umfassen. Von dem in Richtung Trommelboden gesandten Mikrowellensignal MW_{S} werden zumindest zwei Echos (Reflexe) E1,E2 erhalten, die einer ersten Reflexion E1 an der Wäschefüllstandsgrenze und einer zweiten Reflexion E2 am Boden der Wäschetrommel zugeordnet werden können. Durch Mischen des empfangenen Signals MWᵣ mit dem gesendeten Signal MW_{S} im Mischer MX entsteht bei geeigneter Auslegung des bekannten FMCW-Verfahrens ein Echoprofil, wie es in der Figur 6 dargestellt ist. Das Echo E1 mit der geringeren Laufzeit ist dem Echo an der Befüllungsobergrenze, das Echo E2, der Reflexion am Trommelboden zuzuordnen. Beide Amplituden A sind zusätzlich auch durch ihre Phase ϕ und Entfernung d1,d2 bzw. die daraus sich ergebende Laufzeit charakterisiert.

Anhand der Entfernungswerte, ggf. bereits anhand des ersten Echos, kann in Verbindung mit der Wäschetrommelgeometrie direkt auf den Befüllungsgrad der Trommel geschlossen werden. Vorzugsweise wird die Entfernungsmessung bzw. die damit verbundene Füllstandsmessung über mehrere Messungen durchgeführt, wobei zwischen zwei Meßvorgängen eine Wäschebewegung, beispielsweise mittels Rotation der Wäschetrommel oder durch Einblasen eines entsprechend starken Luftstromes durchgeführt wird. Vorzugsweise erfolgt die Messung dann jedoch bei ruhender Wäsche, also erst im Anschluß an die Trommelbewegung bzw. die Trockenluftzufuhr.

Mit der gleichen Messung kann der Feuchtegehalt der Wäsche ermittelt werden. Je feuchter die Wäsche ist, desto größer ist die Amplitude des von der Wäscheoberfläche erzeugten Echos 1 und desto kleiner ist die Amplitude von Echo 2. In Abhängigkeit von der Feuchtigkeit ändern sich zudem die Phasen und die gemessenen Entfernungswege. Beispielsweise wachsen der Phasen- und der Entfernungswert des zweiten Echos bezogen auf die Werte bei leerer Trommel mit zunehmender Feuchte an. Die Entfernung des ersten Echos dagegen verkürzt sich üblicherweise bei zunehmender Trocknung, da die Wäsche dann weniger durch ihr Eigengewicht komprimiert wird. Vorzugsweise werden alle diese Meßinformationen kombiniert ausgewertet, um so die Feuchtemessung von störenden Einflüssen wie Befülldichte und Wäscheart zu befreien, und um weitere Größen meßtechnisch zu bestimmen. Eine verbesserte Separation dieser Einflußgrößen kann auch mit dieser Meßmethode durch unterschiedliche Messungen in unterschiedlichen Frequenzbereichen erfolgen.

Auch hier richtet sich die Wahl der Meßfrequenz an den selben Überlegungen aus, die bereits für die Ausführungsbeispiele gemäß den Figuren 1 bis 4 diskutiert wurden. Dabei ist zu beachten, daß die Messung mit einer ausreichend hohen Bandbreite durchgeführt wird, da nur dann die beiden Echos als getrennte Reflexe aufgelöst werden können. Nimmt man beispielsweise einen Minimalabstand der beiden reflexionsauslösenden Phasengrenzen (Wäschebefüllungsobergrenze und Trommelboden) an, so ist dazu üblicherweise eine Radarmeßsignalbandbreite von ca. 2 GHz erforderlich. In der Folge sind für dieses Ausführungsbeispiel Meßfrequenzen von 2 GHz bis ca. 60 GHz bevorzugt. Bei diesen hohen Frequenzen ist allerdings bei sehr feuchter Wäsche keine Transmission mehr zu erwarten und daher kein zweites Echo mehr zu erfassen. Dies kann jedoch toleriert werden, da durch Reflexion des Mikrowellensignals an der Wäscheoberfläche weiterhin das Echo 1 als Meßgröße zur Verfügung steht. Wird die Wäsche trockener, verschwindet das Oberflächenecho (Echo 1) mehr und mehr, während das zweite, der Reflexion am Trommelbogen zuordenbare Echo 2 dagegen zunimmt und gut auswertbar wird.

Für alle genannten Ausführungen können die Meßgrößen, basierend auf physikalischen Grundgleichungen ausgewertet werden. Eine weitere Möglichkeit besteht jedoch darin, die Meßdaten einem Klassifikator zuzuführen, der die Meßgrößen bestimmten Parameter des Trockungsprozesses zuordnet. Im Prinzip eignen sich dazu alle bekannten Klassifikatortypen, beispielsweise numerische Klassifikationsverfahren, Fuzzy-Klassifikationsverfahren und Klassifikationsverfahren mit neuronalen Netzen. Die letztgenannte Möglichkeit zur Auswertung hat den Vorteil, daß sie für die beschriebenen Meßanordnungen vergleichsweise einfach zu applizieren sind, da die Beziehungen der Meßgrößen zu den Meßparametern nicht bekannt sein müssen. Ein neuronales Netz wird dann lediglich anhand von bekannten Beispielen trainiert. In der Folge ist das neuronale Netz in der Lage, auch unbekannte Meßparameterkombinationen den entsprechenden gesuchten Werten zuzuordnen. In einem neuronalen Netz ist damit das durch Training erworbene Wissen gewissermaßen assoziativ gespeichert, so daß die komplexen Abhängigkeiten der Meßgrößen von den Parametern des Trocknungsprozesses abgebildet werden können, ohne daß diese Zusammenhänge analytisch betrachtet werden müssen.

Vorzugsweise erfolgt die Auswertung der Meßdaten in einer Recheneinheit, die darüber hinaus in Abhängigkeit von den Meßdaten die Steuerung des Trocknungsprozesses beeinflußt. Dabei ist es möglich, die folgenden Trocknungsparameter zu beeinflussen: Zugeführte Wärmeenergie pro Zeiteinheit, Wäschebewegungen, Wäschetrommelbewegungen, Stärke des Trockenluftgebläses und Dauer des Trocknungsprozesses. Die zugeordneten Meßwerte können in einer Anzeigevorrichtung an der Wäschepflegeeinrichtung angezeigt werden. Die automatische Steuerung des Trocknungsprozesses kann auch eine Endabschaltung beim Erreichen eines gewünschten Restfeuchtegehaltes beeinhalten.

Obwohl das erfindungsgemäße Verfahren nur anhand einiger besonders vorteilhafter Ausführungsbeispiele exemplarisch beschrieben werden konnte, ist es nicht auf die Ausführungsbeispiele beschränkt. Vielmehr läßt sich das Prinzip der erfindungsgemäßen Wäschentrockeneinrichtung auch mit variierten Einrichtungen und anderen Meß- und Auswerteverfahren durchführen.

## Patentansprüche

1. Wäschepflegeeinrichtung mit
einem geschlossenen, eine Wäschetrommel (T) enthaltenden Innenraum
einer Einrichtung zum Entzug von Feuchtigkeit aus der Wäsche (W) und
einem Sensor zur Erkennung des Feuchtegehalts der Wäsche, **dadurch gekennzeichnet,**
**daß** der Sensor umfaßt:
im Innenraum angeordnete Sende- und eine Empfangseinrichtungen für Mikrowellen,
eine Meßschaltung und eine Auswerteeinrichtung (mP) zum Ansteuern von Sende- und Empfangseinrichtung, zum Vergleich von gesendetem und empfangenem Mikrowellensignal, zur Ermittlung einer Transmission und/oder Reflexion daraus, und zur Zuordnung der Transmission und/oder Reflexion zu einem zu bestimmenden Feuchtegehalt in der Wäschetrommel.

2. Einrichtung nach Anspruch 1,
bei der die Auswerteeinrichtung einen Komparator für Phase und Amplitude von gesendetem mit empfangenem Mikrowellensignals umfaßt.

3. Einrichtung nach Anspruch 3,
bei der im Innenraum mehrere Sende- und Empfangseinrichtungen in unterschiedlicher Höhe angeordnet sind.

4. Einrichtung nach einem der Ansprüche 1 bis 3,
bei der die Sende- und Empfangseinrichtung als Richtkoppler ausgebildet ist.

5. Einrichtung nach einem der Ansprüche 1-3,
bei der Sende- und Empfangseinrichtung auf einander gegenüberliegenden Seiten der Wäschetrommel angeordnet sind.

6. Einrichtung nach einem der Ansprüche 1 bis 5,
die einen Frequenzmischer umfaßt, dessen erster Eingang mit dem gesendeten Signal belegt ist, dessen zweiter Eingang mit dem empfangenen Signal belegt ist, und dessen Ausgang mit der Auswerteeinrichtung verbunden ist.

7. Einrichtung nach Anspruch 6,
bei der der Frequenzmischer als Quadraturmischer ausgebildet ist.

8. Einrichtung nach einem der Ansprüche 1 bis 7,
mit einer Anzeigevorrichtung für den von der Auswerteeinrichtung ermittelten Feuchtegehalt der Wäsche.

9. Einrichtung nach einem der Ansprüche 1 bis 8,
bei der die Sendeeinrichtung (SA) mit einem abstimmbaren Mikrowellen-Generator (TOSZ) und die Empfangseinrichtung mit einem Detektor (DET) zur frequenzabhängigen Messung verbunden ist.

10. Einrichtung nach einem der Ansprüche 6 bis 9,
bei der die Meßschaltung und Auswerteeinheit (mP) zur Bestimmung der Phasenbeziehung aus dem Mischsignal ausgelegt sind.

11. Verfahren zur Bestimmung des Feuchtegehalts von Wäsche (W) in einer Wäschepflegeeinrichtung,
- bei dem die Wäsche in einer Wäschetrommel (T) vorgelegt wird
- bei dem mit einem Mikrowellengenerator (TOSZ) über eine Antenne (A) ein Mikrowellensignal in die Wäschetrommel eingestrahlt wird,
- bei dem in einer Empfangseinrichtung das Mikrowellensignal nach Durchstrahlen der Wäsche empfangen wird und
- bei dem Amplitude und/oder Phase des empfangenen Mikrowellensignals mit dem eingestrahlten Mikrowellensignal verglichen, Veränderungen in Amplitude und/oder Phase bestimmt und als Meßwerte einer Auswerteeinheit zugeführt werden,
- bei dem die Meßwerte einem Feuchtegehalt in der Wäsche zugeordnet werden.

12. Verfahren nach Anspruch 11,
- bei dem der Mikrowellengenerator (TOSZ) die Frequenz des eingestrahlten Mikrowellensignals während der Messung über einen gegebenen Frequenzbereich variiert,
- bei dem zur Auswertung die bei verschiedenen Frequenzen ermittelten Meßwerte verwendet werden.

13. Verfahren nach Anspruch 12,
bei dem der Mikrowellengenerator (TOSZ) ausgehend von einer Mittenfrequenz während der Messung über einen Frequenzbereich von 100 bis 200 MHz variiert wird.

14. Verfahren nach einem der Ansprüche 11 bis 13,
bei dem die Meßwerte mit einem Klassifikationsverfahren dem Feuchtegehalt zugeordnet werden, wobei ein numerischisches Klassifikationsverfahren oder ein Fuzzyverfahren angewendet oder ein neuronales Netz verwendet wird.

15. Verfahren nach einem der Ansprüche 11 bis 14,
bei dem der Mikrowellengenerator (TOSZ) kurze Pulse generiert und bei dem in der Auswerteeinheit nur aus den empfangenen Signalen Meßwerte generiert werden, die einem gewünschten Ausbreitungsweg und damit einer gegebenen Laufzeit zuordenbar sind.

16. Verfahren nach einem der Ansprüche 11 bis 15,
bei dem der Meßwert durch Mischen des empfangenen Signals mit dem gesendeten Signal erhalten wird.

17. Verfahren nach einem der Ansprüche 11 bis 16,
- bei dem mit mehreren in verschiedenen Höhen in der Wäschetrommel angeordneten Sende- und Empfangseinrichtungen verschiedene Meßwerte ermittelt werden,
- bei dem aus dem jeweiligen Meßwert das Vorhandensein von Wäsche im jeweiligen Strahlengang detektiert wird, und
- bei dem die Anzahl der Meßwerte mit dem Wert "Wäsche vorhanden" einer Befüllungshöhe der Wäschetrommel mit Wäsche zugeordnet und ausgegeben wird.
